# EUROPEAN PATENT APPLICATION

(11) **EP 3 318 682 A1**
(43) Date of publication of application: **09.05.2018**
(21) Application number: 16818209.5
(22) Date of filing: 29.06.2016
(51) Int. Cl.: E03C 1/04

(54) **FAUCET COUPLING STRUCTURE**

(30) Priority: 30.06.2015 KR 20150092603
(71) Applicant: Idin Lab, Inc., Gangnam-gu Seoul 06043 (KR)
(72) Inventor: LEE, Do Kyeong, Seoul 04710 (KR); LEE, Yong Woon, Seoul 06965 (KR)
(74) Representative: Zardi, Marco
(86) International application number: PCT/KR2016/006952
(87) International publication number: WO 2017/003176

(57) **Abstract**

A faucet coupling structure includes connection pipe connected to a connecting body at one side thereof and formed with a coupler at an opposite side thereof. A connection pipe formed on a faucet is fitted to the coupler. A grab ring is installed within the coupler such that the connection pipe is not separated from the coupler by holding the connection pipe. A pressure ring is rotated together with the connection pipe and is moved forward and backward along the connection pipe. When the pressure ring expands the grab ring, the connection pipe is separated from the coupler. When the pressure ring is engaged with the fastening nut, the fastening nut is separated from the coupler by rotating the connection pipe. When the pressure ring is disengaged from the fastening nut, an angle of the faucet is adjusted by rotating the connection pipe.

## Description

### TECHNICAL FIELD

The present invention relates to a faucet coupling structure, and in particular, to a faucet coupling structure configured such that a faucet can be connected while an angle of the faucet is adjustable at desired degrees.

### BACKGROUND

Water supply units are collectively referred to as a device which is installed in an indoor wall, receives water supplied from a water supply source through a water supply pipe, and finally discharges the supplied water through a faucet or a water discharge pipe.

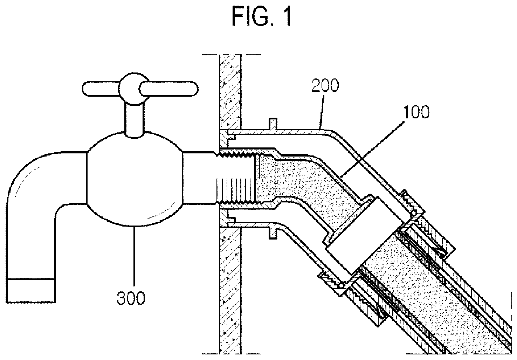

As shown in **FIG. 1**, such a water supply unit includes a connection body 100 that connects a water supply pipe for supplying water and a faucet for discharging the supplied water. The connection body 100 is formed such that the water supply pipe for supplying water is connected to one side of the connection body 100 and the faucet is connected to the opposite side of the connection body 100. The aforementioned water supply unit is disclosed in Korean Patent Application Publication No. 10-2010-0063411 entitled "Water supply unit having stop function" and published on June 11, 2010.

In this regard, such a connection body 100 is generally installed by being embedded in a wall. The connection body 100 is installed in an interior of a body case 120 embedded in the wall and maintains a firmly fixed state in the installed position such that the connection body is installed robustly with no movement, thereby supporting a faucet 400.

The connection body 100 is connected to the faucet 400 through threaded engagement. The faucet 400 has a fastening tube, which has threads formed thereon, such that the fastening tube is threadedly engaged with the connection body 100.

In this regard, there should be strong compression forces such that supplied water does not leak through a connection portion between the fastening tube and the connection body. To this end, the fastening tube formed on the faucet is strongly tightened, thereby rotating the faucet until the end of the fastening tube does not move any more. In some cases, however, the faucet may stop in a position where the faucet has rotated further than the desired position after the completion of the coupling. This is because there is considerable difficulty in accurately positioning the faucet after completion of the coupling due to many parameters such as elasticity of components, the length of the threads, and the like.

Therefore, the coupling is completed in many cases after rotating the faucet more than is needed or after rotating the faucet less than is needed in order to accurately position the faucet. This involves a problem in that, when the faucet is rotated more than is needed, the components receive excessive pressure and are damaged, and, when the faucet is rotated less than is needed, the components are not sufficiently compressed to create appropriate pressure, resulting in the supplied water leaking.

### SUMMARY

The present invention has been made to solve the above-mentioned problems. It is an object of the present invention to provide a faucet coupling structure configured such that, when a faucet is connected to a connection body, the faucet can be installed while an angle of the faucet is being freely adjusted as desired. It is another object of the present invention to provide a faucet coupling structure configured such that, when the faucet is separated, the faucet can be separated without any additional tool, thereby improving convenience in maintenance.

According to other embodiments of the present invention, a grab ring is provided such that a connection pipe formed on a faucet is not separated from a coupler. A pressure ring is provided so as to expand the grab ring such that a connection pipe can be separated, and a fastening nut is provided so as to be coupled to the coupler to surround the pressure ring. Therefore, the pressure ring is not separated. The connection pipe is configured to rotate together with the pressure ring. The pressure ring is rotatable while selectively engaging with the fastening nut.

Accordingly, the faucet firmly maintains its original position during a normal time period. If needed, the pressure ring is disengaged from the fastening nut such that the angle of the faucet can be adjusted by freely rotating the faucet. When the pressure ring 240 and the fastening nut are engaged with each other, on the other hand, the faucet can be held and rotated without any additional tool, thereby separating the fastening nut.

According to the present invention, when the faucet is connected to the connection body, the faucet can be installed while the angle of the faucet is freely adjusted as desired. In addition, when the faucet is separated, the faucet can be held and rotated by hand. Thus, the faucet can be separated without any additional tool. As a result, it is possible to improve convenience in maintenance.

### BRIEF DESCRIPTION OF THE DRAWINGS

**FIG. 1** is an exemplary view illustrating a conventional faucet coupling structure.
**FIG. 2** is an exploded view showing a faucet coupling structure according to the present invention.
**FIG. 3** is an exemplary sectional view showing a faucet coupling structure according to the present invention when a faucet is installed.
**FIG. 4** is an exemplary enlarged view of a portion "A" in **FIG. 2** when engagement protrusions are disengaged such that an angle of a faucet according to the present invention can be adjusted.
**FIG. 5** is an exemplary enlarged view of a portion "A" in **FIG. 2** when the engagement protrusions are engaged such that a fastening nut can be separated by rotating the faucet according to the present invention.

### DETAILED DESCRIPTION

The present invention seeks provide a faucet coupling structure configured such that, when a faucet is connected, an angle of the faucet can be freely adjusted as desired and, when the faucet is separated, the faucet can be separated without any additional tool, thereby improving convenience in maintenance.

To this end, the present invention proposes a faucet coupling structure wherein a water supply pipe is connected to one side of a connection body, and a coupler is formed on the opposite side of the connection body such that a connection pipe formed on a faucet is fitted to the coupler. A grab ring is installed in an interior portion of the coupler and the connection pipe is not separated from the coupler such that the grab ring stays in contact with the connection pipe. A pressure ring which is rotated together with the pressure ring and is moved forward and backward along the connection pipe is provided so that the connection pipe can be separated from the coupler when the pressure ring expands the grab ring.

A fastening nut surrounding the pressure ring is threadedly engaged with the coupler so that the pressure ring is not separated. The pressure ring and the fastening nut are formed to selectively engage with each other.

The fastening nut can be separated from the coupler by rotating the connection pipe in a state that the pressure ring and the fastening nut are engaged with each other. When the pressure ring and the fastening nut are disengaged from each other, an angle of the faucet can be adjusted by rotating the connection pipe.

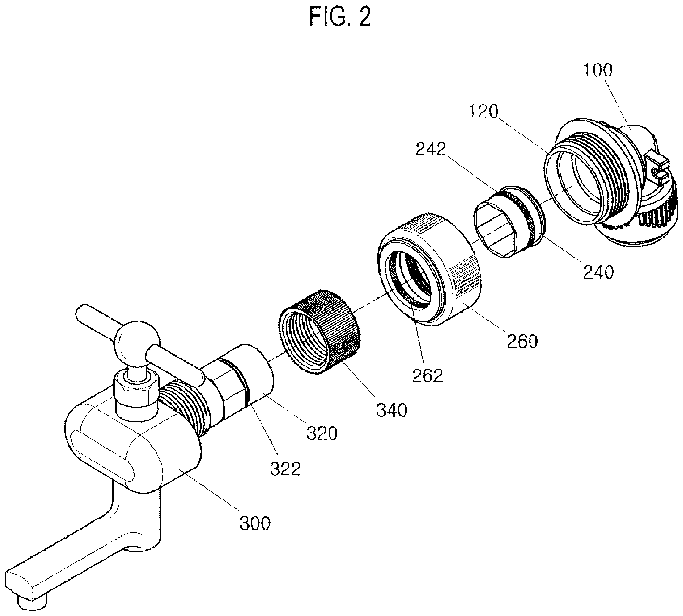

Hereinafter, the present invention will be described in detailed with reference to **FIGS. 2** to **5**.

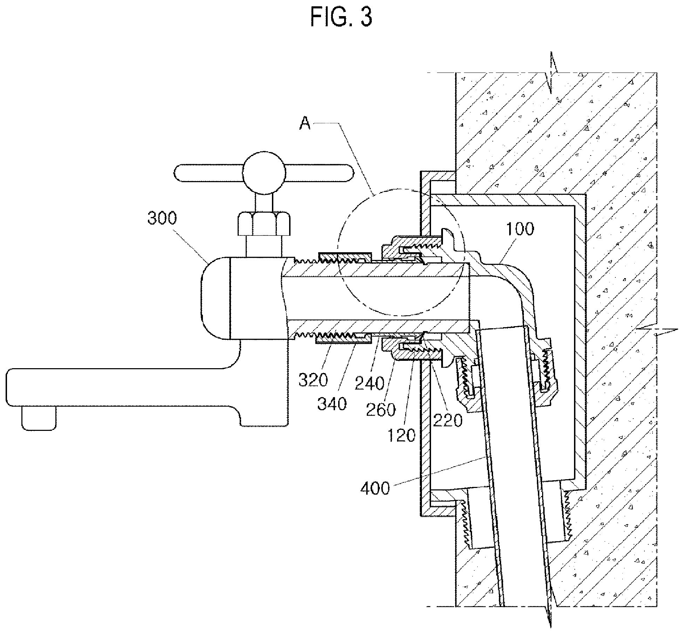

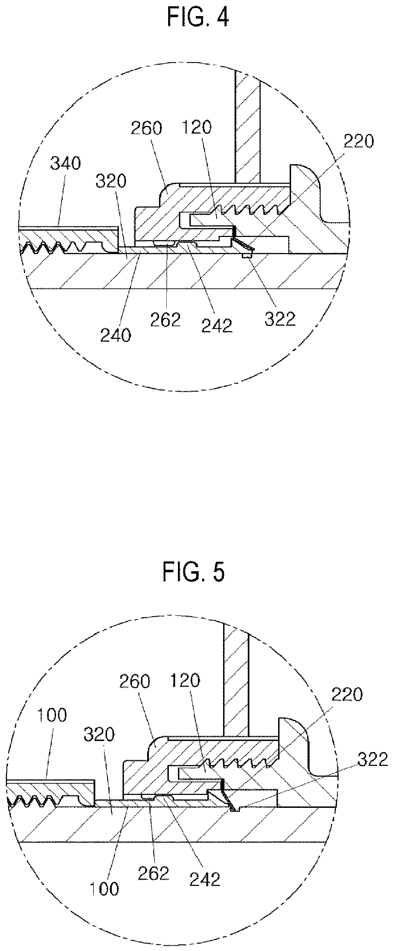

**FIG. 2** is an exploded view showing a faucet coupling structure according to the present invention. **FIG. 3** is an exemplary sectional view showing a faucet coupling structure according to the present invention when a faucet is installed. **FIG. 4** is an exemplary enlarged view of a portion "A" in **FIG. 2** when engagement protrusions are disengaged such that an angle of a faucet according to the present invention can be adjusted. **FIG. 5** is an exemplary enlarged view of a portion "A" in **FIG. 2** when the engagement protrusions are engaged such that the fastening nut can be separated by rotating the faucet according to the present invention.

A faucet 300 according to the present invention has a connection pipe 320 and is connected to a connection body 100. The connection body 100 is in most cases installed so as to be embedded in a wall surface. The connection body 100 is connected to a water supply pipe at one side of the connection body 100 and is formed with a coupler 120 at the opposite side of the connection body 100. When the connection body 100 is embedded in a wall, the coupler 120 is exposed outward from the wall such that the connection pipe 320 formed on the faucet 300 is fitted and coupled to the coupler 120. Therefore, water supplied through a water supply pipe 400 can be delivered to the faucet 300 through the connection body 100 and then discharged.

In order to accomplish the coupling between the connection pipe 320 and the coupler 120 and the object of the present invention, the present invention includes a grab ring 220, a pressure ring 240, and a fastening nut 260 and further includes an actuation nut 340 for actuating the pressure ring 240. In addition, an appropriate sealing means, such as a packing, may be provided to seal a gap between the connection pipe 320 and the coupler 120 such that supplied water does not leak.

The grab ring 220 is formed in a ring shape and has sawteeth protruding toward the center thereof. The sawteeth are inclined in a direction toward an interior of the coupler 120. Such a grab ring 220 is installed in a position where the connection pipe 320 can penetrate through the interior of the coupler 120. Therefore, when the connection pipe 320 formed on the faucet 300 is fitted to the coupler 120, a distal end of the connection pipe 320 pushes the sawteeth with the forward movement of the connection pipe 320 and then the connection pipe 320 penetrates through and fitted to the grab ring 220. On the other hand, when the connection pipe 320 is moved backward, the sawteeth rub against an outer peripheral surface of the connection pipe 320. Thus, the connection pipe 320 is not easily pulled out. In the above-described configuration where the grab ring 220 is provided, a catching groove 322 is formed on an outer periphery of the connection pipe 320 such that tips of the sawteeth are caught in the catching groove 322 and do not fall out.

The pressure ring 240 is formed in a pipe shape and has a predetermined length such that the connection pipe 320 penetrates through the pressure ring 240. The pressure ring 240 is configured to be moved forward and backward along the connection pipe 320. When the pressure ring 240 is moved forward, a leading end of the pressure ring 240 pushes the sawteeth formed on the grab ring 220. Accordingly, the sawteeth are tilted and the grab ring 220 expands. When the connection pipe 320 is moved backward, the connection pipe 320 can fall out of and be separated from the coupler 120.

When the pressure ring 240 is excessively moved forward, the leading end of the pressure ring 240 may be moved past the grab ring 220. Therefore, it is necessary to pre-calculate and appropriately adjust a distance where the pressure ring 240 can be moved forward. The leading end of the pressure ring 240 may be formed to be inclined in an arrow shape such that the leading end of the pressure ring 240 can push the sawteeth to be in inclined contact with the sawteeth.

In the present invention, an actuation nut 340 for moving the pressure ring 240 forward is formed on the outer periphery of the connection pipe 320 according to the present invention. The actuation nut 340 is threadedly engaged with the outer periphery of the connection pipe 320. As the actuation nut 340 is rotated, the actuation nut 340 is moved forward and backward along the connection pipe 340. When the connection nut 340 is moved forward, a leading end of the actuation nut 340 pushes a trailing end of the pressure ring 240 such that the pressure ring 240 is moved forward toward the grab ring 220. Such an actuation nut 340 can be maintained in a state such that the actuation nut 340 stops at a specific position on the connection pipe 320. This is because the actuation nut 340 is threadedly engaged with the connection pipe 320. Therefore, the actuation nut 340 can push the pressure ring 240 to the specific position and then maintain its state.

The pressure ring 240 is formed to be engaged with the connection pipe 320 formed on the faucet 300 such that the pressure ring 240 is rotated together with the connection pipe 320. An interior of the pressure ring 240 has a polygonal shape, and a portion of the connection pipe 320, which is fitted to the pressure ring 240, is formed in a polygonal shape corresponding to the shape of the interior of the pressure ring 240. Thus, the pressure ring 240 can be rotated together with the connection pipe 320. With this configuration, when the connection pipe 320 is rotated, the pressure ring 240 is rotated together with the connection pipe 320. Further, the fastening nut 260 as described later can also be rotated together with them.

The fastening nut 260 is formed to surround the pressure ring 240 to be fastened to the coupler 120. An inner diameter of the fastening nut 260 is slightly larger than an outer diameter of the pressure ring 240 such that the fastening nut 260 is coupled to surround the pressure ring 240. Accordingly, when the fastening nut 260 is coupled to the coupler 120 as described above, the leading end of the pressure ring 240 is engaged with the interior of the fastening nut 260. As a result, the pressure ring 240 is not separated. Meanwhile, when the fastening nut 260 is coupled to the coupler 120, the trailing end of the pressure ring 240 is exposed outward from the fastening nut 260. The trailing end of the pressure ring 240, which is exposed outward in this manner, is pushed. Thus, the pressure ring 240 is moved forward.

The pressure ring 240 and the fastening nut 260 are formed to be selectively engaged with each other. Therefore, when the connection pipe 320, which penetrates through the pressure ring 240 and is fitted to the coupler 120, is rotated in a state that the pressure ring 240 and the fastening nut 260 are engaged with each other, the fastening nut 260 is rotated together. In other words, when the connection pipe 320 is rotated, the pressure ring 240 is rotated together with the connection pipe 320 because the pressure ring 240 and the connection pipe 320 formed on the faucet 300 are engaged with each other. As a result, the fastening nut 260 is rotated together with the pressure ring 240.

With the above-mentioned configuration, it is possible to couple the fastening nut 260 to the coupler 120 or to separate the fastening nut 260 from the coupler 120 without any additional tool. According to the prior art, the fastening nut is coupled or separated by rotating the fastening nut 260 using an additional tool. In contrast, since the fastening nut 260 can be rotated by a user by grasping and rotating a body of the faucet 300 with their hands, the fastening nut 260 can be coupled to the coupler 120 or separated from the coupler 120 without any additional tool.

In addition, when the pressure ring 240 is disengaged from the fastening nut 260, an angle of the faucet can be adjusted by rotating the connection pipe 320. The connection pipe 320 is solely rotated in a state that the fastening nut 260 is coupled to the coupler 120. As such, the angle of the faucet 300 can be adjusted by rotating the connection pipe 320 at desired degrees without separating respective parts for coupling the faucet 300 to the connection body 100, such as the grab ring 220, the pressure ring 240, and the fastening nut 260.

A configuration of selective engagement between the pressure ring 240 and the fastening nut 260 can be accomplished by engagement protrusions 242 and 262 formed on the outer periphery of the pressure ring 240 and on the inner periphery of the fastening nut 260, respectively. The engagement protrusions 242 and 262 may be implemented in various shapes. For example, protrusions are formed on the outer periphery of the pressure ring 240 and on the inner periphery of the fastening nut 260 so as to protrude continuously in tooth shapes, respectively, and are engaged with each other. The engagement protrusions 242 and 262 are formed at a position where the engagement protrusions 242 and 262 are disengaged from each other when the pressure ring 240 is moved forward toward the grab ring 220 by a predetermined distance. Thus, it possible to selectively rotate the connection pipe 320.

When the pressure ring 240 is moved forward toward the grab ring 220 such that the engagement protrusions 242 and 262 are disengaged from each other as described above, the leading end of the pressure ring 240 pushes the grab ring 220. Therefore, when a force pushing the pressure ring 240 is removed, the pressure ring 240 is elastically pushed back by the grab ring 220 and returns to the original position such that the engagement protrusions 242 and 262 are engaged with each other again.

Hereinafter, a process of coupling the faucet 300 to the connection body 100, adjusting the angle of the faucet 300, and uncoupling the faucet 300 according to the present invention will be described. In a state that the connection body 100 is embedded in the wall surface, the water supply pipe is connected to the one side of the connection body 100, and the coupler 120 formed on the opposite side of the connection body 100 is installed to be exposed outward from the wall. Thus, in this state, the process of coupling the faucet 300 to the connection body 100 will be described with reference to a preferred embodiment.

First, the packing and the grab ring 220 are sequentially fitted to the coupler 120. The pressure ring 240 is then fitted to the coupler 120, and the fastening nut 260 is fastened to the coupler 120. In this case, the engagement protrusions 242 and 262 formed on the pressure ring 240 and the fastening nut 260 are engaged with each other, and the trailing end of the pressure ring 240 penetrates through the fastening nut 260 and is exposed to the outside. The pressure ring 240 remains in an inseparable state as long as the fastening nut 260 is not separated.

The fastening nut 260 can be tightened with an additional tool. A tool can be freely used because the faucet 300 has not yet been coupled. Therefore, the fastening nut 260 is tightened with a tool and firmly coupled.

When the fastening nut 260 is fastened and completed as described above, the faucet 300 is coupled to the connection body 100. The connection pipe 320 formed on the faucet 300 is pushed toward the pressure ring 240 such that the connection pipe 320 penetrates through the pressure ring 240 and the grab ring 220 sequentially. Thus, the connection pipe 320 is fitted to the coupler 120. The connection pipe 320 is pushed inward until the sawteeth formed on the grab ring 220 are engaged with the catching groove 322 formed on the outer periphery of the connection pipe 320. Thus, the connection pipe 320 is not separated from the coupler 120. In this case, the actuation nut 340 has been coupled to the connection pipe 320 in advance.

Thereafter, the angle of the faucet 300 is then adjusted. The angle is adjusted by rotating the faucet 300 in a state that the pressure ring 240 is pushed and moved forward by tightening the actuation nut 340. In other words, when the pressure ring 240 is moved forward, the engagement protrusions 242 and 262 formed on the pressure ring 240 and the fastening nut 260 are disengaged from each other, as shown in **FIG. 4****.** In this state, when the faucet 300 is rotated, the connection pipe 320 is rotated together with the pressure ring 240. As a result, the angle is adjusted.

When pressure ring 240 is pushed and moved forward by tightening the actuation nut 340 as described above, the leading end of the pressure ring 240 pushes and expands the sawteeth formed on the grab ring 220. The connection pipe 320 then can be separated from the coupler 120.

After the angle is adjusted to a desired degree, the actuation nut 340 is unfastened. When the actuation nut 340 is unfastened, the pressure ring 240 is pushed back by the grab ring 220 and returns to the original position. Thus, the engagement protrusions 242 and 262 formed on the pressure ring 240 and the fastening nut 260 are engaged with each other, as shown in **FIG. 5****.** As a result, rotation of the faucet 300 is limited, and the position of the faucet 300 is fixed.

On the other hand, when the fastening nut 260 needs to be unfastened and separated from the coupler 120 in order to replace the grab ring 220, the packing, or the pressure ring 240 installed on the coupler 120, the faucet 300 is rotated in such a direction that the fastening nut 260 is unfastened. When the faucet 300 is rotated, the connection pipe 320 is rotated, and the fastening nut 260 is rotated together with the pressure ring 240. Thus, the fastening nut 260 is unfastened to be separated from the coupler 120. In this case, the fastening nut 260 can be separated without any additional tool by grasping and rotating the faucet 300 using hands. In this state, it is also possible to fasten the fastening nut 260 to the coupler 120 by rotating the faucet 300 in the opposite direction.

### EXPLANATION OF REFERENCE NUMERALS

100: connection body, 120: coupler
220: grab ring, 240: pressure ring
242: engagement protrusion, 260: fastening nut
262: engagement protrusion, 300: faucet
320: connection pipe, 322: catching groove
340: actuation nut, 400: water supply pipe

## Claims

1. A faucet coupling structure wherein a water supply pipe is connected to one side of a connection body, and a coupler is formed on the opposite side of the connection body such that a connection pipe formed on a faucet is fitted to the coupler,
wherein a grab ring is installed in an interior of the coupler and the connection pipe is not separated from the coupler by holding the connection pipe,
wherein a pressure ring which is rotated together with the pressure ring and is moved forward and backward along the connection pipe is provided such that the connection pipe can be separated from the coupler when the pressure ring expands the grab ring,
wherein a fastening nut surrounding the pressure ring is threadedly engaged with the coupler such that the pressure ring is not separated,
wherein engagement protrusions are formed on an outer periphery of the pressure ring and on an inner periphery of the fastening nut, respectively, so as to be selectively engaged with each other,
wherein the fastening nut can be separated from the coupler by rotating the connection pipe in a state that the pressure ring and the fastening nut are engaged with each other, and
wherein, when the pressure ring and the fastening nut are disengaged from each other, an angle of the faucet can be adjusted by rotating the connection pipe.

2. The faucet coupling structure of Claim 1, wherein, when the pressure ring is moved forward toward the grab ring, the engagement protrusions are disengaged from each other such that the connection pipe can be rotated.

3. The faucet coupling structure of Claim 2, wherein an actuation nut is threadedly engaged with an outer periphery of the connection pipe such that the actuation nut pushes the pressure ring and the pressure ring is moved forward.

4. The faucet coupling structure of Claim 3, wherein, when a force that the actuation nut pushes the pressure ring is removed, the pressure ring is elastically pushed back by the grab ring, returns to an original position, and is engaged with the fastening nut.
